# EUROPEAN PATENT APPLICATION

(11) **EP 4 287 008 A1**
(43) Date of publication of application: **06.12.2023**
(21) Application number: 23176674.2
(22) Date of filing: 01.06.2023
(51) Int. Cl.: G06F 3/04883, G06F 3/04817, G06F 3/0484, G06F 3/0485, A63F 13/214, A63F 13/426

(54) **PROGRAM FOR MANIPULATING OBJECT**

(30) Priority: 03.06.2022 JP 2022090923
(71) Applicant: Alvion Inc., Suita-City, Osaka 564-0063 (JP)
(72) Inventor: DOHNO, Kuninori, Osaka, 564-0063 (JP)
(74) Representative: v. Bezold & Partner Patentanwälte - PartG mbB

(57) **Abstract**

A controller 2 determines whether a finger is lifted from a screen during a swipe (S210) and determines whether the finger is lifted outside a screen edge determination frame (S211). When the finger is lifted inside the screen edge determination frame (No in S211), the controller 2 retains the current manipulation information (S212 to S215). When the finger is lifted outside the screen edge determination frame, (Yes in S211), the controller 2 increases a manipulation strength level, updates and retains the current manipulation information (S216 to S220). After the swipe, movement while the finger is lifted can be retained and manipulation can be resumed when the finger touches the screen again. In an upward flick, a tap, or a downward flick, movement while the finger is lifted can be also retained and manipulation can be also resumed when the finger touches the screen again.

## Description

### FIELD OF THE INVENTION

The present disclosure relates to a program executed by a computer connected to or including a display device that includes an operation input part. More specifically, the present disclosure relates to a program for manipulating an object with a touch operation.

### BACKGROUND OF THE INVENTION

Unexamined Japanese Patent Application Publication No. 2018-187289 discloses a program that causes a computer (1), the computer (1) being connected to or including a display device (2) that includes an operation input part (9) for receiving a touch operation, to serve as virtual controller attribute changing means (14) for changing, in response to an operation of the operation input part (9) by a user, an attribute of a virtual controller image (10a) and as display image generating means (13) for generating the virtual controller image (10a) according to a strength attribute (15d) and a directional attribute (15f) of the virtual controller image (10a) changed by the virtual controller attribute changing means (14) and generating a manipulation target image (10b) to be displayed by the display device (2) in such a way that a manipulation target moves in conjunction with the strength attribute (15d) and the directional attribute (15f) of the virtual controller image (10a). The program disclosed in Unexamined Japanese Patent Application Publication No. 2018-187289 can realize, on the computer, a virtual controller that allows the manipulation target to be manipulated with high accuracy. Note that reference signs in parentheses are reference signs described in Unexamined Japanese Patent Application Publication No. 2018-187289. The entire disclosure of Unexamined Japanese Patent Application Publication No. 2018-187289 is incorporated by reference herein.

Consideration is given here to what kind of manipulation will be caused by the program disclosed in Unexamined Japanese Patent Application Publication No. 2018-187289 when a finger is lifted from a screen or moved out of the screen and the finger touches the screen again. Note that the following description is made assuming a case where "a finger is moved out of a screen" is identical to a case where "a finger is lifted from a screen".

Unexamined Japanese Patent Application Publication No. 2018-187289 discloses that, when it is determined that a finger is lifted, the meaning of the operation is recognized as one of touch and hold, tap, swipe, and flick (see S509 in paragraph [0169] and FIG. 8 of Unexamined Japanese Patent Application Publication No. 2018-187289), and the virtual controller attribute changing part 14 proceeds to a strength attribute changing process where the strength attribute is changed in accordance with a predetermined rule (see S511 in paragraph [0171] and FIG. 8 of Unexamined Japanese Patent Application Publication No. 2018-187289). Unexamined Japanese Patent Application Publication No. 2018-187289 describes an example of the predetermined rule, in which by controlling meter readings indicating a strength in such a way that the meter readings are gradually reduced to a smaller value over time, a distance that the manipulation target travels in one frame is reduced. Accordingly, it is possible, when the finger is lifted from the screen, to display the manipulation target in such a way that the manipulation target is decelerating.

However, according to the description in Unexamined Japanese Patent Application Publication No. 2018-187289, when a finger touches the screen again after the finger is lifted from the screen, the manipulation may not be continued from a state before the finger is lifted because the strength attribute may have been changed in the strength attribute changing process (see S511 in FIG. 8 of Unexamined Japanese Patent Application Publication No. 2018-187289) from that before the finger is lifted.

Unexamined Japanese Patent Application Publication No. 2018-187289 also describes that in order to maintain manipulation strength, either a touch and hold in which a finger is not lifted from the screen (see paragraph [0159] and the flow from S506 to S508 in FIG. 8 of Unexamined Japanese Patent Application Publication No. 2018-187289), or a flick operation with which the strength attribute is continuously increased (see paragraph [0176] and S517 in FIG. 8 of Unexamined Japanese Patent Application Publication No. 2018-187289), needs to be performed. As described above, in Unexamined Japanese Patent Application Publication No. 2018-187289, some clear and unambiguous operation is required in order to maintain the manipulation strength.

For example, in a case of a device with a small screen, such as a smartphone or a smartwatch, the size of the screen where a touch can be made is limited. Therefore, keeping a finger touched on the screen or continuing a flick operation may seem highly difficult. In particular, in a case of a device with a very small screen, such as a smartwatch, difficulty is drastically increased.

When a finger is accidentally moved out of an operational area, tapping again may result in the manipulation strength being returned to an unintended strength.

Thus, the program disclosed in Unexamined Japanese Patent Application Publication No. 2018-187289 has such a problem that when a finger touches the screen again after the finger is lifted from the screen, the manipulation strength may have been changed and difficulty of operations is high.

In addition, when the program disclosed in Unexamined Japanese Patent Application Publication No. 2018-187289 is configured in such a way that the manipulation target decelerates while a finger is lifted from the screen, movement of an object may be stopped, and difficulty of operations may be also high.

### SUMMARY OF THE INVENTION

Therefore, an objective of the present disclosure is to provide a program for manipulating an object of which difficulty of operations is low.

In particular, an objective of the present disclosure is to provide a program that enables manipulation to be continued, even when a finger touches the screen again after the finger is lifted from the screen or moved out of the screen, from a state before the finger is lifted from the screen.

In addition, an objective of the present disclosure is to provide a program that enables movement of the object to be continued even when a finger is lifted from the screen or moved out of the screen.

**To achieve the objects, the** program of the discloser causes a computer connected to or including a display device that includes an operation input part for receiving a touch operation, to serve as:
means for determining whether or not a touch made on the operation input part is lost during a swipe;
means for retaining current manipulation information with respect to an object that serves as a manipulation target when it is determined that the touch made on the operation input part is lost during the swipe;
means for displaying, in a state in which a touch is not made on the operation input part, the object in such a way that the object is moving on; and
means for resuming manipulation of the object according to the retained current manipulation information when a touch is made on the operation input part again.

The means for retaining may retain information related to a movement direction and manipulation strength according to the swipe in any desired direction on a display screen as the current manipulation information with respect to the object that serves as a manipulation target when it is determined that the touch made on the operation input part is lost during the swipe; and the means for displaying, may generate, in a state in which a touch is not made on the operation input part, an image of the object and a background image according to the movement direction and the manipulation strength represented by the retained current manipulation information, and displays the object in such a way that the object is moving on the background image.

The program may further cause the computer to serve as means for generating and displaying a virtual controller image indicating the manipulation strength and the movement direction.

The program may enable the computer to configure all areas capable of detecting an operation input to serve as the operation input part and to configure an operation determination frame to serve as a screen edge determination frame when the entire screen is configured to serve as the operation input part.

The means for retaining may update the current manipulation information to manipulation information having one level higher strength when it is determined that the touch is lost outside a screen edge determination frame defined in advance, and the means for displaying may display, in a state in which a touch is not made on the operation input part, movement of the object according to the current manipulation information that has been updated.

The means for retaining, may be capable of updating the current manipulation information to manipulation information having one level lower strength when it is determined that the touch is lost outside a screen edge determination frame defined in advance and a movement direction when the touch is lost is in a predetermined downward direction, and the means for displaying may display, in a state in which a touch is not made on the operation input part, movement of the object according to the current manipulation information that has been updated.

The program may further cause the computer to serve as means for determining whether or not an operation performed on the operation input part is a flick in a predetermined upward direction. In this case, the means for retaining may update the current manipulation information to manipulation information having one level higher strength when it is determined that the operation is a flick in the predetermined upward direction, and the means for displaying may display, in a state in which a touch is not made on the operation input part, movement of the object according to the current manipulation information that has been updated.

The program may further cause the computer serves as means for determining whether or not an operation performed on the operation input part is a tap or a flick in a predetermined downward direction, the means for retaining may update the current manipulation information to manipulation information having one level lower strength when it is determined that the operation is a tap or a flick in the predetermined downward direction, and the means for displaying may display, in a state in which a touch is not made on the operation input part, movement of the object according to the current manipulation information that has been updated.

The program may further cause the computer to serve as means for determining whether or not an operation performed on the operation input part is a double tap. In this case, the means for retaining discards the retained information when it is determined that the operation is a double tap, and the means for displaying displays the object being stopped.

According to the present disclosure, when a finger is lifted from the screen during the swipe, movement of the object will be displayed continuously according to the retained current manipulation information. Even when the finger touches the screen again subsequently, manipulation of the object is resumed according to the retained current manipulation information; therefore, the manipulation may be continued from a state before the finger is lifted from the screen.

In addition, by configuring all areas capable of detecting an operation input to serve as an operation input part and configuring an operation determination frame to serve as a screen edge determination frame when the entire screen is configured to serve as the operation input part, regardless of presence or absence of the virtual controller image, the object, and other items to be displayed, operations may be performed using the entire screen. In particular, in a case of a device with a small screen, by enabling operations to be performed on the entire screen, the difficulty of operations may be reduced.

When the finger is lifted outside the screen edge determination frame during the swipe, the strength is increased by one level and movement of the object is displayed continuously, and when a touch is made again by the finger, the manipulation may be continued from a state in which the strength is higher by one level.

When the finger is lifted outside the screen edge determination frame during the swipe due to the movement thereof in a downward direction, the strength is reduced by one level and movement of the object is displayed continuously, and when a touch is made again by the finger, the manipulation may be continued from a state in which the strength is lower by one level.

When a flick in a predetermined upward direction is performed, the strength is increased by one level and movement of the object is displayed continuously, and when a touch is made again, the manipulation may be continued from a state in which the strength is higher by one level.

When a tap or a flick in a predetermined downward direction is performed, the strength is reduced by one level and movement of the object is displayed continuously, and when a touch is made again, the manipulation may be continued from a state in which the manipulation strength is lower by one level.

When a double tap is performed, the object is displayed in such a way that the object is stopped.

Thus, according to the present disclosure, a program, the difficulty of operations of which is low, can be provided for manipulating the object.

These and other objectives, features, aspects, and effects of the present disclosure become more apparent from the following detailed description taken in conjunction with the accompanying drawings.

### BRIEF DESCRIPTION OF DRAWINGS

A more complete understanding of this application can be obtained when the following detailed description is considered in conjunction with the following drawings, in which:
FIG. 1 is a block diagram illustrating a functional configuration of an information processing apparatus 1 in an embodiment according to the present disclosure;
FIG. 2 is a flowchart illustrating a flow of a display process in the information processing apparatus 1 executing a program for manipulation;
FIG. 3 is a flowchart illustrating a processing flow in the information processing apparatus 1 executing the program for manipulation when a finger touches a screen;
FIG. 4A is a diagram illustrating an exemplary screen when a swipe is performed;
FIG. 4B is a diagram illustrating an exemplary screen when a swipe is performed after a touch is made again;
FIG. 4C is a diagram illustrating an exemplary screen when a swipe is performed after a touch is made again;
FIG. 5 is a diagram illustrating an exemplary screen when a tap is performed;
FIG. 6 is a diagram illustrating an exemplary screen when a double tap is performed;
FIG. 7 is a diagram illustrating an exemplary screen when a flick is performed in an upward direction;
FIG. 8 is a diagram illustrating an exemplary screen when a flick is performed in a downward direction;
FIG. 9A, FIG. 9B, and FIG. 9C are diagrams each illustrating an example of how a movement direction is displayed in a virtual controller image;
FIG. 10A, FIG. 10B, and FIG. 10C are diagrams each illustrating an example of how manipulation strength is displayed in the virtual controller image; and
FIG. 11 is a flowchart illustrating a variation example of FIG. 3, to which determination of whether the movement direction at a time when the finger is lifted is in the downward direction or not (S301) is added.

### DETAILED DESCRIPTION OF THE INVENTION

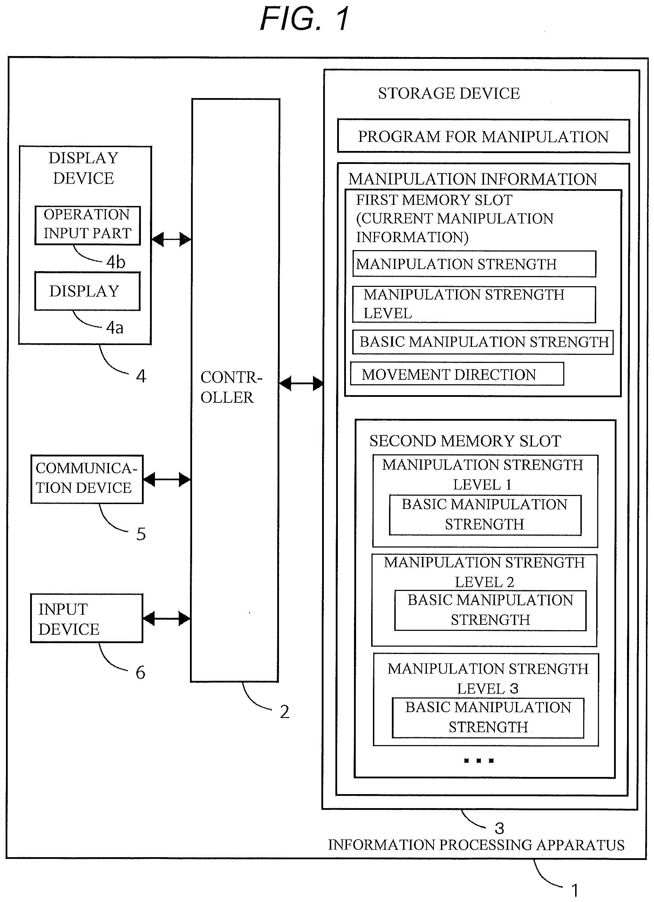

In FIG. 1, an information processing apparatus 1 is a computer that is equipped with a controller 2, a storage device 3, a display device 4, a communication device 5, and an input device 6. Note that the display device 4 may be included in the information processing apparatus 1 or may be a device separate from and connected to the information processing apparatus 1 in a wired or wireless manner. The controller 2 may comprise a CPU (Central Processing Unit), a MPU (Micro Processing Unit) and so on. The storage device 3 is a non-transitory storage medium. For example, the storage device 3 may comprise a RAM (Random Access Memory), a ROM (Read Only Memory), a Flash Memory, a HDD (Hard Desk Drive apparatus), an SDD (Solid State Drive apparatus) and so on. The storage device 3 may be included in the information processing apparatus 1 or may be a device separate from and connected to the information processing apparatus 1 in a wired or wireless manner or via a network. It is assumed that the storage device 3 includes an external storage device connected to a network.

The storage device 3 stores a program (referred to as "program for manipulation") for manipulating an object and manipulation information.

The controller 2 reads and executes the program for manipulation stored in the storage device 3, and executes processes related to manipulation and display of the object that serves as a manipulation target.

The manipulation information is information necessary to execute the program for manipulation. The manipulation information includes information stored in a first memory slot and information stored in a second memory slot.

In the first memory slot, "manipulation strength", "manipulation strength level", "basic manipulation strength", and "movement direction" are stored as "current manipulation information".

The "manipulation strength" in the "current manipulation information" represents manipulation strength for the object, for example, movement speed of the object.

The "manipulation strength level" in the "current manipulation information" represents a level of the manipulation strength.

The "basic manipulation strength" in the "current manipulation information" represents basic manipulation strength in the "manipulation strength level".

The "movement direction" in the "current manipulation information" represents a movement direction of the object.

In the second memory slot, the "basic manipulation strength" is stored for each manipulation strength level.

The display device 4 includes a display (display device) 4a and an operation input part 4b. The display device 4 is preferably, for example, but not limited to a device commonly referred to as a touchscreen. The display 4a is, for example, a liquid crystal display panel or an OLED panel. The operation input part 4b receives a touch operation by a user with a finger or a stylus.

The communication device 5 is a device for communication via a network or with a Bluetooth (registered trademark) device.

The input device 6 is a device other than the operation input part 4b for receiving an input.

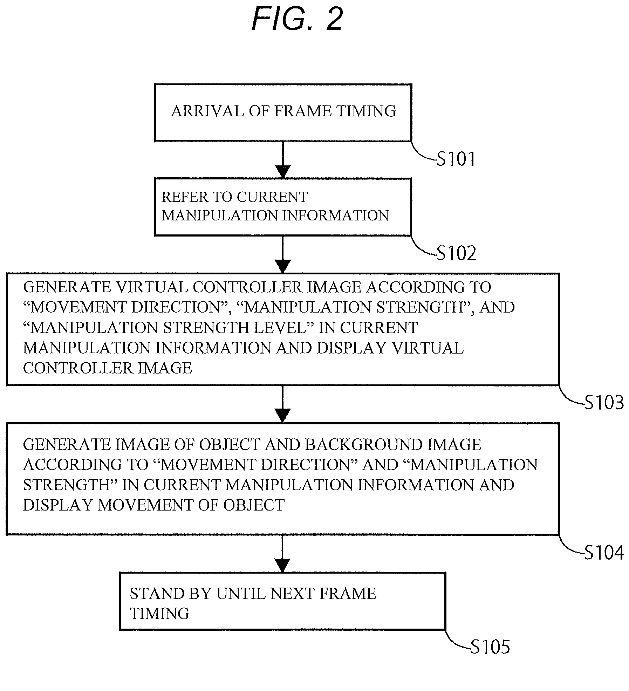

Next, referring to FIG. 2, a flow of the display process in the information processing apparatus 1 executing the program for manipulation is described.

The display process is executed at every frame timing of the display 4a. When the frame timing arrives (S101), the controller 2 refers to the "current manipulation information" stored in the first memory slot of the storage device 3 (S 102).

The controller 2 generates a virtual controller image according to the "movement direction", the "manipulation strength", and the "manipulation strength level" in the "current manipulation information", and displays the virtual controller image on the display 4a (S 103).

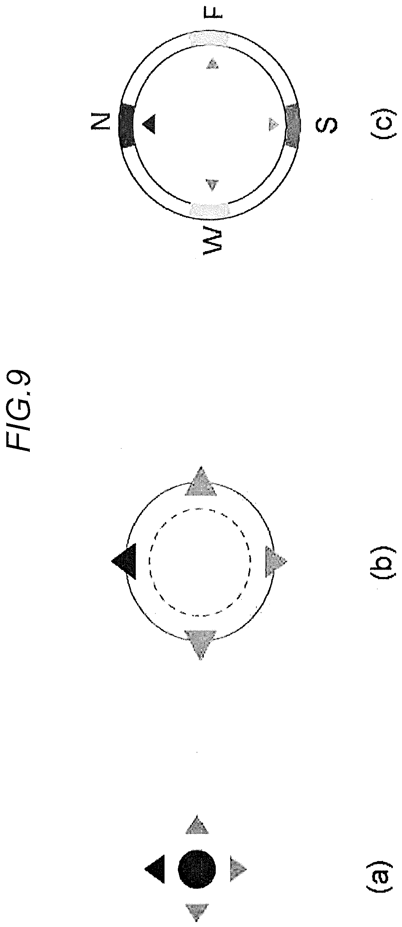

Examples of how the "movement direction" is displayed in the virtual controller image are illustrated in FIGS. 9A to 9C. The direction in which the object that serves as the manipulation target is moving can be represented by indicating the movement direction with an arrow or the like (including various display methods using an arrow or a spherical object moving inside a circle).

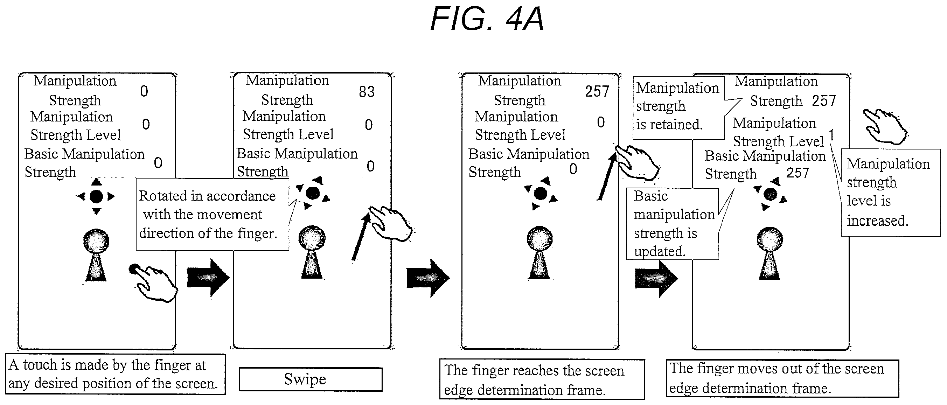

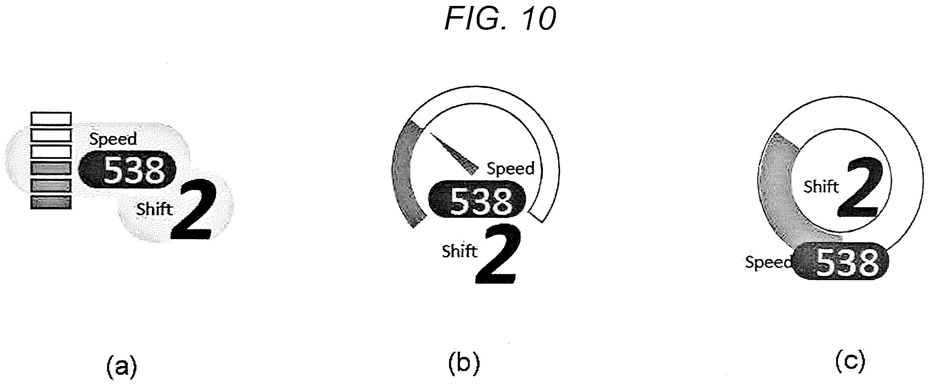

Examples of how the "manipulation strength" and the "manipulation strength level" are displayed in the virtual controller image are illustrated in FIGS. 10A to 10C. As illustrated in FIGS. 10A to 10C, examples here illustrate that the "manipulation strength" is indicated with a numerical value of the "speed" and an image of a gauge and the "manipulation strength level" is indicated with a number of "shift". Alternatively, as illustrated in FIGS. 4A to 8, the "manipulation strength", the "manipulation strength level", and the "basic manipulation strength" may be simply indicated with a numerical value. Note that, although the numerical values of the "basic manipulation strength" are indicated in FIGS. 4A to 8 to facilitate understanding, whether or not to display the "manipulation strength", the "manipulation strength level", and the "basic manipulation strength" may be determined as necessary.

It should be appreciated that the virtual controller images illustrated in the figures are merely examples and by no means limits the present disclosure.

In S 104, the controller 2 generates an image of the object and a background image according to the "movement direction" and the "manipulation strength" in the current manipulation information, and displays movement of the object. The controller 2 then stands by until the next frame timing (S 105).

In this way, in the present embodiment, according to the "current manipulation information" stored in the storage device 3, the controller 2 generates the virtual controller image, generates the image of the object and the background image, and displays movement of the object at each frame timing.

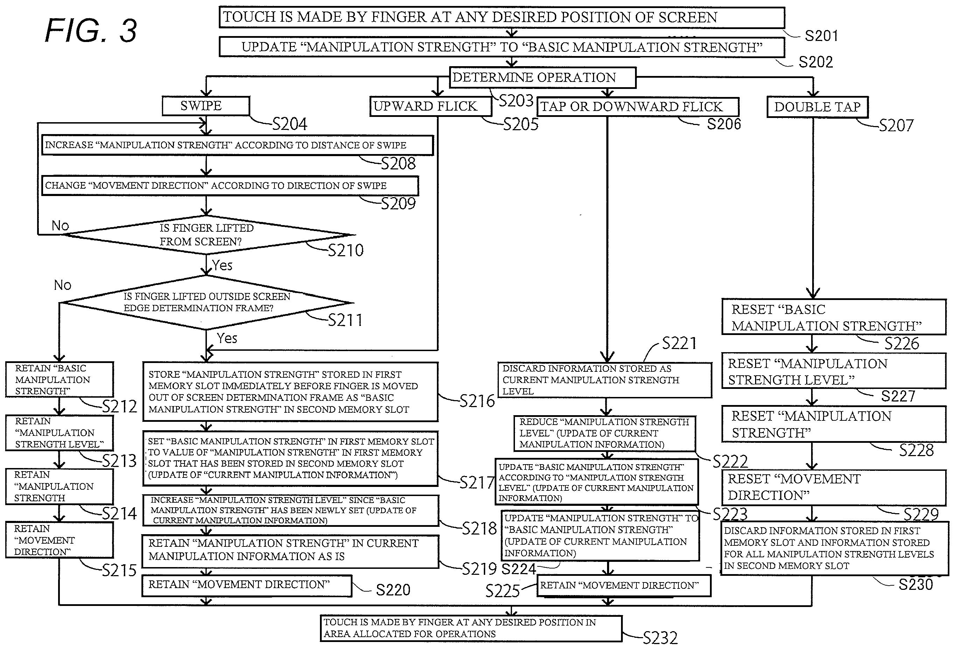

Next, referring to FIG. 3, a processing flow at a time when a finger touches the screen (operation input part 4b) at any desired position is described. Note that although it is described that the finger touches the screen, the processing flow is similar when a stylus or other operation instrument touches the screen instead of the finger. Any desired position of the screen mentioned here is a concept that includes, not limited to any desired position of a physical display screen, any desired position within an area allocated for operations in the display screen when part of the display screen is allocated for operations.

When a touch is made by the finger at any desired position of the screen (S201), the controller 2 updates the "manipulation strength" in the "current manipulation information" to the "basic manipulation strength" (S202).

There are following two cases as timings for starting an operation for S201. The first one is a case where the operation is performed for the first time or the "current manipulation information" has been reset. The second one is a case where information in the "current manipulation information" before the finger is lifted is retained.

In the first case, in an operation for S202, the "manipulation strength" in the "current manipulation information" is set to a default value (for example, "0").

In the second case, due to operations for S212, S217, and S223 to be described below, the "manipulation strength" before the finger is lifted is retained as the "basic manipulation strength". In the second case, in the operation for S202, the "manipulation strength" in the "current manipulation information" is updated to the retained "basic manipulation strength". Therefore, when a touch is made on the screen again by the finger, manipulation performed immediately before the finger is lifted will be continued.

Then, the controller 2 determines that the operation that has been performed is which of a swipe, a flick in an upward direction (in FIG. 3, represented as "upward flick"), a tap or a flick in a downward direction (in FIG. 3, represented as "downward flick"), or a double tap (S203).

The upward direction that serves as a determination criterion for the upward flick may have a predetermined angle defined appropriately in advance. Therefore, the predetermined upward direction does not have to be an upward direction completely parallel to a side of the screen, and the predetermined upward direction is an upward direction that is oriented within a range of predetermined angles.

The downward direction that serves as a determination criterion for the downward flick may also have a predetermined angle defined appropriately in advance. Therefore, the predetermined downward direction does not have to be a downward direction completely parallel to a side of the screen, and the predetermined downward direction is a downward direction that is oriented within a range of predetermined angles.

Since the top and the bottom is determined depending on a positional relationship with the display device, an orientation or a direction of tilt of the display device, or the like, the upward direction and the downward direction may be conceptually represented respectively as a first direction and a second direction.

The difference between a swipe and a flick is appropriately defined according to a known technology, and these operations may be defined so as to enable differentiation between these two operations.

When a slide or a scroll is used to represent a swipe, such operation shall fall under a swipe.

A tap is an operation of touching the screen lightly once. A double tap is an operation of touching the screen lightly twice in a row.

In S203, when the controller 2 determines that the operation is a swipe (S204), the controller 2 increases the "manipulation strength" in the "current manipulation information" according to the distance of the swipe (S208), and changes the "movement direction" in the "current manipulation information" according to the direction of the swipe (S209).

When a frame timing arrives while such a swipe operation is performed, as illustrated in FIG. 2, the controller 2 displays the virtual controller image and movement of the object according to the "current manipulation information". In processes to be described below, every time a frame timing arrives, the virtual controller image and movement of the object will be also displayed similarly. Hereinafter, when description needs to be made specifically, display process at the time when a frame timing arrives is described, but description is appropriately omitted.

The controller 2 determines whether or not the finger is lifted from the screen (S210). It should be appreciated that this process may be executed as an interrupt process caused by the finger being lifted from the screen. As long as the finger is not lifted from the screen, in other words, while the swipe is continuously performed, the controller 2 performs operations for S208 and S209. When the finger is lifted from the screen, the controller 2 determines whether or not the finger is lifted outside a screen edge determination frame (S211).

The screen mentioned here is not limited to a tangible screen of a physical display device, but includes the area or space where any information operable by the user is displayed. The screen edge determination frame mentioned here is a concept that includes, not limited to a physical edge of the display screen, an edge of a zone designated as the area allocated for operations in the display screen.

For example, by configuring all areas capable of detecting an operation input to serve as the operation input part 4b when the entire screen is configured to serve as the operation input part 4b, an operation determination frame may be used as the screen edge determination frame. In this case, the zone designated as the area allocated for operations is the entire screen.

For example, when part of the areas capable of detecting an operation input serves as the operation input part 4b, the operation determination frame of the operation input part 4b may be used as the "screen edge determination frame". In this case, the zone designated as the area allocated for operations is part of the entire screen.

In both cases described above, it may be configured that manipulation is performed when a touch is made at any desired position of the screen regardless of presence or absence of the virtual controller image, the object, or the like. Alternatively, it may be configured in an opposite manner, that a portion of the display screen does not receive an operation. In which area of the screen an operation is received by no means limits the present disclosure.

The determination of whether or not the finger is lifted from the screen in S210 is made before the determination of whether or not the finger is lifted outside the screen edge determination frame in S211. Therefore, an event in which the finger is lifted from the screen includes the case where the finger is lifted inside the screen edge determination frame as well as the case where the finger is lifted outside the screen edge determination frame.

Note that depending on hardware or a program to be implemented, as described in S210 and S211, determination of whether or not the finger is lifted inside the screen edge determination frame and whether or not the finger is lifted outside the screen edge determination frame does not require two steps and the determination may be made in just one step. Even in such a case, whether or not the finger is lifted from the screen is determined and such hardware or program shall be included in the present disclosure.

In S211, when the finger is lifted inside the screen edge determination frame (No in S211), the controller 2 retains the information stored in the first memory slot, that is, the "basic manipulation strength" in the "current manipulation information" (S212), the "manipulation strength level" in the "current manipulation information" (S213), the "manipulation strength" in the "current manipulation information" (S214), and the "movement direction" in the "current manipulation information" (S215), and stands by until a touch is made by the finger at any desired position in the area allocated for operations (S232).

Thus, when the finger is lifted inside the screen edge determination frame after the swipe, the "current manipulation information" remains to be retained. Therefore, when a frame timing arrives, even if the finger is lifted, the virtual controller image and movement of the object will be displayed according to the retained "current manipulation information".

Since the "current manipulation information" is retained in this manner, when a touch is made on the screen again by the finger, the manipulation before the finger is lifted will be continued in the steps S202 and later according to the retained "current manipulation information". In the determination of the operation when a touch is made on the screen again (S203), the manipulation before the finger is lifted will be continued even when an operation other than the swipe is performed, let alone a similar swipe operation; as a result, intuitive and excellent operability can be achieved.

In S211, when the finger is lifted outside the screen edge determination frame, (Yes in S211), the controller 2 stores the "manipulation strength" stored in the first memory slot immediately before the finger is moved out of the screen edge determination frame as the "basic manipulation strength" in the second memory slot (S216). In this case, the "manipulation strength level" in the second memory slot for storing the "basic manipulation strength" is set to the "manipulation strength level" in the "current manipulation information".

The controller 2 then set the "basic manipulation strength" in the first memory slot to the value of the "manipulation strength" in the first memory slot that has been stored in the second memory slot and updates the "current manipulation information" (S217).

Since the "basic manipulation strength" has been newly set, the controller 2 subsequently increases the "manipulation strength level" to one level higher manipulation strength and updates the "current manipulation information" (S218). The controller 2 retains the "manipulation strength" in the "current manipulation information" (S219) and the "movement direction" in the "current manipulation information" (S220) as is, and stands by until a touch is made by the finger at any desired position in the area allocated for operations (S232).

Even if the finger is lifted outside the screen edge determination frame, the "manipulation strength" and the "movement direction" in the "current manipulation information" are retained by operations for S219 and S220. Therefore, similarly to S212 to S215, when a frame timing arrives, even if the finger is lifted, the virtual controller image and movement of the object will be displayed according to the retained "current manipulation information".

Since the "current manipulation information" is retained, when a touch is made on the screen again by the finger, the manipulation before the finger is lifted will be continued in the steps S202 and later according to the retained "current manipulation information". In the determination of the operation when a touch is made on the screen again (S203), the manipulation before the finger is lifted will be continued even when an operation other than the swipe is performed, let alone a similar swipe operation; as a result, intuitive and excellent operability can be achieved.

In S216, the "basic manipulation strength" is set in the manipulation strength level in the second memory slot, the manipulation strength level corresponding to the "manipulation strength level" in the "current manipulation information" stored in the first memory slot; as a result, in S217 and S218, the "manipulation strength level" in the "current manipulation information" is increased and updated to the "manipulation strength" having a new manipulation strength level that is higher by one level in the next swipe operation. Therefore, when a swipe is performed to the outside of the screen edge determination frame, manipulation with a one level higher "manipulation strength level" is performed in the next operation, allowing stepwise manipulation to be performed.

A specific example of display in operations for S216 to S220 is described with reference to FIGS. 4A to 4C. As illustrated in FIG. 4A, a touch is first made by a finger at any desired position of the screen, and when a swipe is performed, the virtual controller image rotates in accordance with the direction of the finger and the "manipulation strength" is increased from "0" to "83". Further continuing the swipe increases the "manipulation strength" from "83" to "257", and it is assumed here that the finger reaches the screen edge determination frame and moves out of the screen edge determination frame. At this timing, the "movement direction" and the "manipulation strength 257" are retained, the manipulation strength level is increased to "1", and the "basic manipulation strength" is set to "257" from "0". In this condition, although the finger is lifted from the screen, the virtual controller image and movement of the object will be displayed according to the "manipulation strength" and the "movement direction", both of which have been retained.

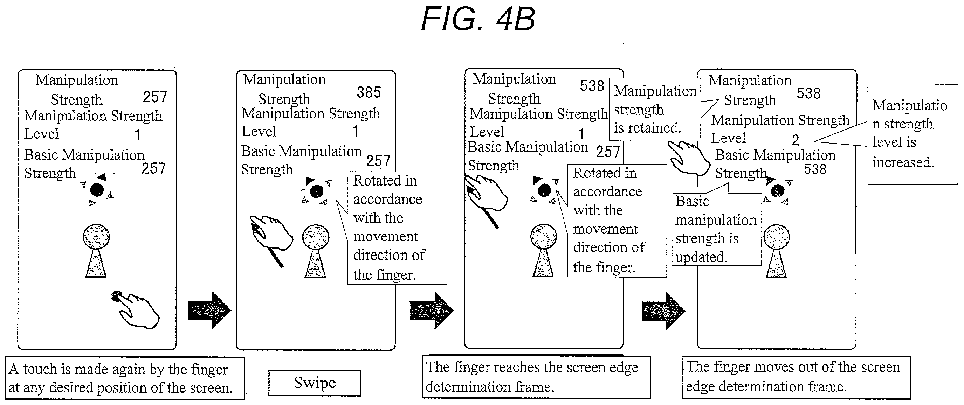

Next, description is made on a case where a touch is made again by a finger at any desired position of the screen. As illustrated in FIG. 4B, when a touch is made again, the "manipulation strength" and the "basic manipulation strength" before the finger is lifted are retained. Therefore, it is understood that with a touch on the screen again, the manipulation before the finger is lifted is continued.

With regard to the movement direction, the direction of the arrow of the virtual controller image changes in accordance with the movement direction of the finger when a touch is made again. In this case, rather than changing the movement direction sharply from the movement direction before the touch is made again to the movement direction after the touch is made again, changing the movement direction sequentially may further provide an operator with a sense that the manipulation before the touch is made is continued.

The "manipulation strength" increases from "257" to "385" according to the distance of the swipe. Further continuing the swipe increases the "manipulation strength" from "385" to "538", and it is assumed here that the finger reaches the screen edge determination frame and moves out of the screen edge determination frame. At this timing, the "movement direction" and the "manipulation strength 538" are retained, the manipulation strength level is increased from "1" to "2", and the "basic manipulation strength" is set to "538" from "257". In this condition, similarly to FIG. 4A, although the finger is lifted from the screen, the virtual controller image and movement of the object will be displayed according to the "manipulation strength" and the "movement direction", both of which have been retained.

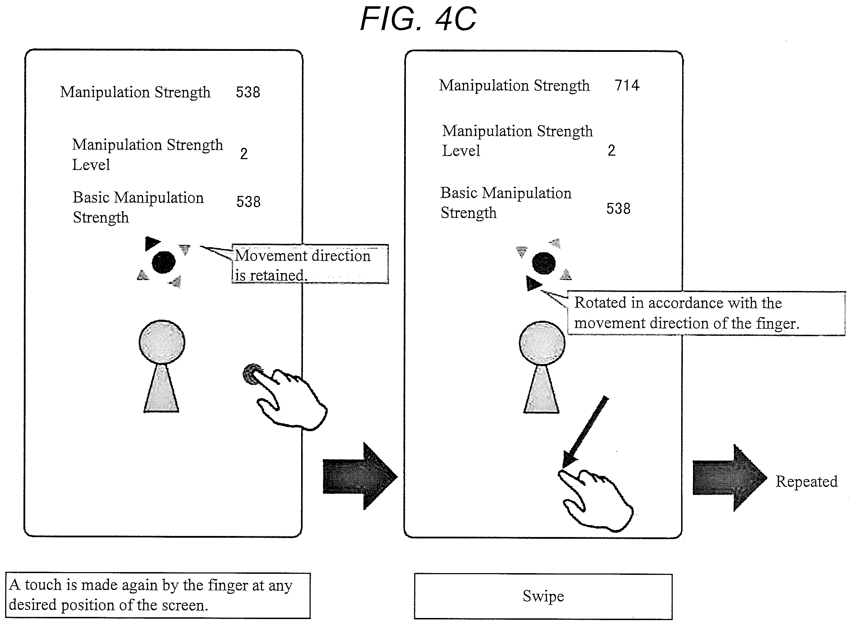

As illustrated in FIG. 4C, when a touch is made again by the finger at any desired position of the screen, the movement direction has been retained, but the virtual controller image rotates in accordance with the movement direction of the finger and the "manipulation strength" is increased from "538" to "714" according to the distance of the swipe. Similar processes are repeated thereafter.

If the finger is lifted inside the screen edge determination frame in the condition illustrated in FIG. 4C, the processes in S212 to S215 will be executed, and even if the finger is being lifted, the object will be displayed in such a way that the object is moving with the "manipulation strength 714" in the direction of an arrow to the lower left on the paper in FIG. 4C.

It is assumed that with the determination of the operation in S203, the controller 2 recognizes an upward flick (S205). In the case of an upward flick, the controller 2 proceeds to the processes in S216 and later. In other words, in the case of an upward flick, unlike in the case of the swipe, increase of the "manipulation strength" and change of the "movement direction" are not made according to the distance and the direction of the swipe, but the process of increasing the "manipulation strength level" is executed.

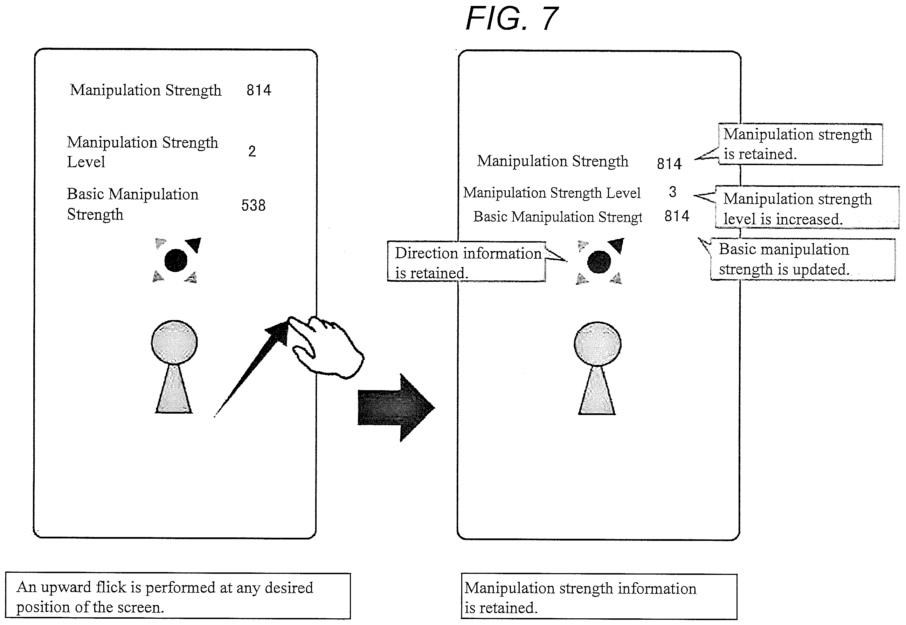

Referring to FIG. 7, a specific example of display when an upward flick is performed is described. As illustrated in FIG. 7, in a case where the "manipulation strength" is "814", the "manipulation strength level" is "2", and the "basic manipulation strength" is "538", when an upward flick is performed at any desired position of the screen, while the "movement direction" and the "manipulation strength" are retained, the "manipulation strength level" is increased from "2" to "3", and the "basic manipulation strength level" is updated from "538" to "814".

Thus, with the upward flick, the "manipulation strength level" is increased by one level, thereby allowing manipulation with the new "manipulation strength level" to be performed.

In the case of the upward flick, since the "current manipulation information" is also retained after the finger is lifted, the virtual controller image and movement of the object will be displayed according to the retained "current manipulation information" even if the finger is being lifted.

In addition, when a touch is made on the screen again by the finger, the manipulation before the finger is lifted will be continued in the steps S202 and later according to the retained "current manipulation information". In the determination of the operation when a touch is made again (S203), the manipulation before the finger is lifted will be continued even when an operation other than the upward flick is performed, let alone a similar upward flick; as a result, intuitive and excellent operability can be achieved.

It is assumed that with the determination of the operation in S203, the controller 2 recognizes a tap or a downward flick (S206). The controller 2 discards the information stored as the current manipulation strength level (S221). The controller 2 then reduces the "manipulation strength level" in the "current manipulation information" by one level (S222), and the "current manipulation information" is updated in such a way that the "basic manipulation strength" stored in the second memory slot that corresponds to the "manipulation strength level" after the reduction is set in the "basic manipulation strength" in the "current manipulation information" (S223). The controller 2 subsequently updates the "current manipulation information" in such a way that the "basic manipulation strength" is set in the "manipulation strength" in the "current manipulation information" (S224). The controller 2 retains the "movement direction" in the "current manipulation information" as is (S225), and stands by until a touch is made by the finger at any desired position in the area allocated for operations (S232).

Since the "current manipulation information" is retained, when a touch is made on the screen again by the finger, the manipulation before the finger is lifted will be continued in the steps S202 and later according to the retained "current manipulation information". In the determination of the operation when a touch is made again (S203), the manipulation before the finger is lifted will be continued even when an operation other than the tap or the downward flick is performed, let alone a similar tap or downward flick operation; as a result, intuitive and excellent operability can be achieved.

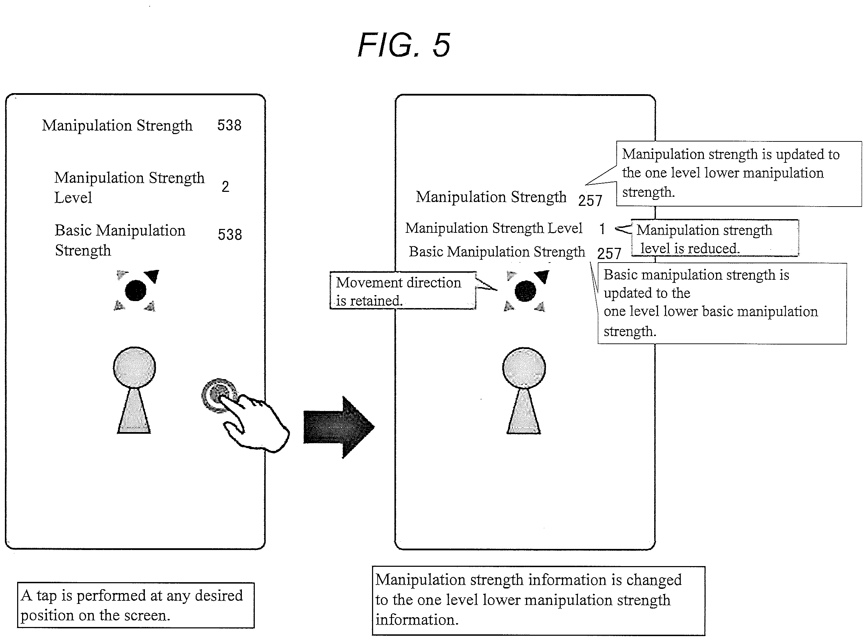

Referring to FIG. 5, a specific example of display when a tap is performed is described. As illustrated in FIG. 5, in a case where the "manipulation strength" is "538", the "manipulation strength level" is "2", and the "basic manipulation strength" is "538", when a tap is performed at any desired position on the screen, while the "movement direction" is retained, the "manipulation strength level" is reduced from "2" to "1" by one level, the "manipulation strength" is updated to the one level lower "basic manipulation strength" stored in the second memory slot, and the "basic manipulation strength" is updated to the one level lower "basic manipulation strength" stored in the second memory slot.

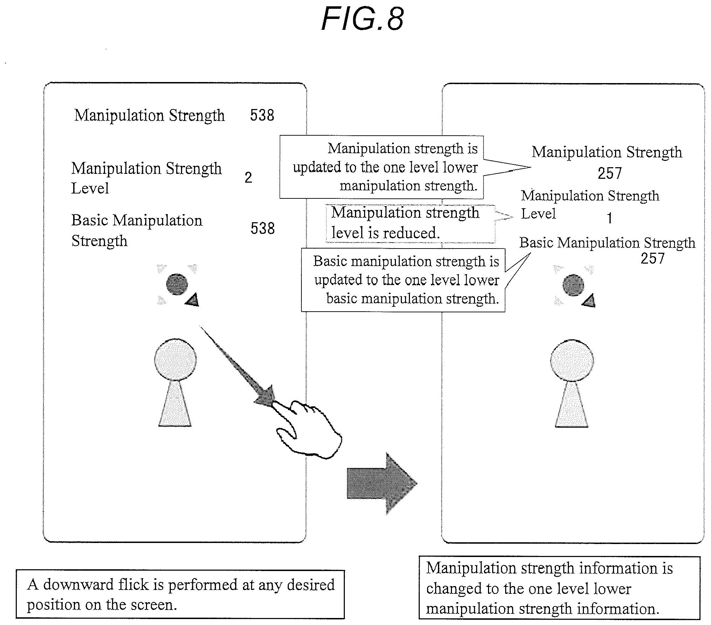

Referring to FIG. 8, a specific example of display when a downward flick is performed is described. As illustrated in FIG. 8, in a case where the "manipulation strength" is "538", the "manipulation strength level" is "2", and the "basic manipulation strength" is "538", when a downward flick is performed at any desired position on the screen, while the "movement direction" is retained, the "manipulation strength level" is reduced from "2" to "1" by one level, the "manipulation strength" is updated to the one level lower "basic manipulation strength" stored in the second memory slot, and the "basic manipulation strength" is updated to the one level lower "basic manipulation strength" stored in the second memory slot.

It is assumed that with the determination of the operation in S203, the controller 2 recognizes a double tap (S207). The controller 2 resets indications indicated in the virtual controller image, that is, the indication of the "basic manipulation strength" (S226), the indication of the "manipulation strength level" (S227), the indication of the "manipulation strength" (S228), and the indication of the "movement direction" (S229).

The controller 2 then discards the information stored in the first memory slot and the information stored for all manipulation strength levels in the second memory slot (S230), and stands by until a touch is made by the finger at any desired position in the area allocated for operations (S232). With a process in this manner, when the next frame timing arrives, the object that serves as the manipulation target will be displayed in such a way that the object stops movement.

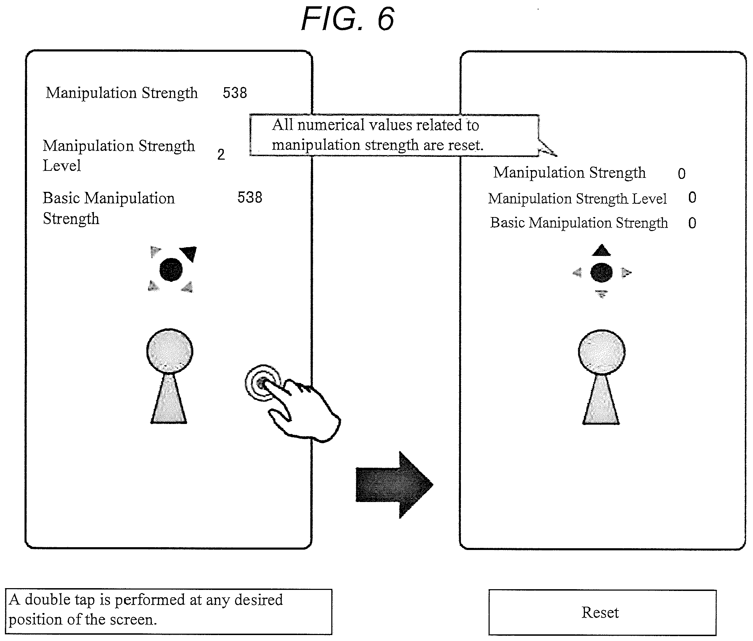

Referring to FIG. 6, a specific example of display when a double tap is performed is described. As illustrated in FIG. 6, in a case where the "manipulation strength" is "538", the "manipulation strength level" is "2", and the "basic manipulation strength" is "538", when a double tap is performed at any desired position on the screen, the "manipulation strength", the "manipulation strength level", and the "basic manipulation strength" are reset to "0", and the arrow indicating the "movement direction" is displayed so as to indicate that the movement is stopped.

With the embodiment described above, the following operations can be achieved.

Even when the finger is lifted from the screen during the swipe, with the processes in S212 to S215, movement of the object will be displayed continuously according to the retained current manipulation information.

Even when the finger is lifted outside the screen edge determination frame during the swipe, with the processes in S219 and S220, movement of the object will be displayed continuously according to the retained current manipulation information.

When the finger is lifted outside the screen edge determination frame, with the processes in S216 to S218, the strength is increased by one level and movement of the object will be displayed continuously.

When the finger is lifted with the swipe operation inside the screen edge determination frame, with the process in S212, the "basic manipulation strength" in the "current manipulation information" is retained; when a touch is made again, with the process in S202, the "basic manipulation strength" before the finger is lifted is set in the "manipulation strength" after the touch is made again, and the manipulation before the finger is lifted can be continued as is when a touch is made again.

When the finger is lifted with the swipe operation outside the screen edge determination frame, with the process in S217, the "basic manipulation strength" in the "current manipulation information" is retained; when a touch is made again, with the process in S202, the "basic manipulation strength" before the finger is lifted is set in the "manipulation strength" after the touch is made again, and the manipulation before the finger is lifted can be continued as is when a touch is made again.

When a flick in the predetermined upward direction is performed, with the processes in S216 to S218, the strength is increased by one level and movement of the object will be displayed continuously.

When the finger is lifted with the upward flick operation outside the screen edge determination frame, with the process in S217, the "basic manipulation strength" in the "current manipulation information" is retained; when a touch is made again, with the process in S202, the "basic manipulation strength" before the finger is lifted is set in the "manipulation strength" after the touch is made again, and the manipulation before the finger is lifted can be continued as is when a touch is made again.

When a tap or a downward flick in the predetermined upward direction is performed, with the processes in S221 to S225, the strength is reduced by one level and movement of the object will be displayed continuously.

When the finger is lifted from the screen with the tap operation or the downward flick operation, with the process in S223, the "basic manipulation strength" in the "current manipulation information" is retained; when a touch is made again, with the process in S202, the "basic manipulation strength" before the finger is lifted is set in the "manipulation strength" after the touch is made again, and the manipulation before the finger is lifted can be continued as is when a touch is made again.

When a double tap is performed, with the processes in S226 to S230, the object is displayed in such a way that the object is stopped.

With these processes, regardless of the size of the display being large or small, the manipulation strength will be operated similarly.

With these operations, a program, the difficulty of operations of which is low, can be provided for manipulating the object.

### (A variation example)

In the embodiment described above and illustrated in FIG. 3, when determining whether or not the finger is moved away from the screen edge determination frame, determination is not made on whether the finger is moved in the upward or downward direction or in a direction other than those. However, when the screen is configured, for example, to be a first-person perspective screen where the primal behavior of the object that serves as the manipulation target is to advance, when a swipe in the downward direction is performed and the finger is lifted outside the screen edge determination frame, it may be intuitively appropriate to determine that the object is decelerated.

In a condition where operations are supposed to be performed mostly in the lower part of the screen, when a downward flick is performed in order to reduce the "manipulation strength level" but it ends in failure due to the finger moving out of the screen edge determination frame, in the embodiment described above and illustrated in FIG. 3, the "manipulation strength level" may be increased to the contrary, and it may result in an operation that is opposite to intuitive.

The flick operation may be sensuously different with each person, which significantly affects whether the operability is good or bad.

A case is considered here where the operator performs a tap in order to reduce the "manipulation strength level" (for decelerating the object, for example) in a condition where a button (for example, a pause button) is disposed on the screen. When the operator is carried away with operations and performs a tap in order to decelerate the object at a position where the pause button is disposed, the pause may be executed contrary to the operator's intention to decelerate the object. Thus, when reducing the "manipulation strength level" with a tap, it may result in manipulation that is against the operator's intention.

In the embodiment described above and illustrated in FIG. 3, in order to increase the "manipulation strength level", a swipe with lifting the finger outside the screen edge determination frame or an upward flick needs to be performed. In order to reduce the "manipulation strength level", a tap or a downward flick needs to be performed.

However, in terms of an intuitive operation, if the "manipulation strength level" can be reduced with a swipe in the downward direction with lifting the finger outside the screen edge determination frame, the operability may be further improved. When possibility of a failure in performing a tap or a downward flick is taken into account, such operation is considered to be effective.

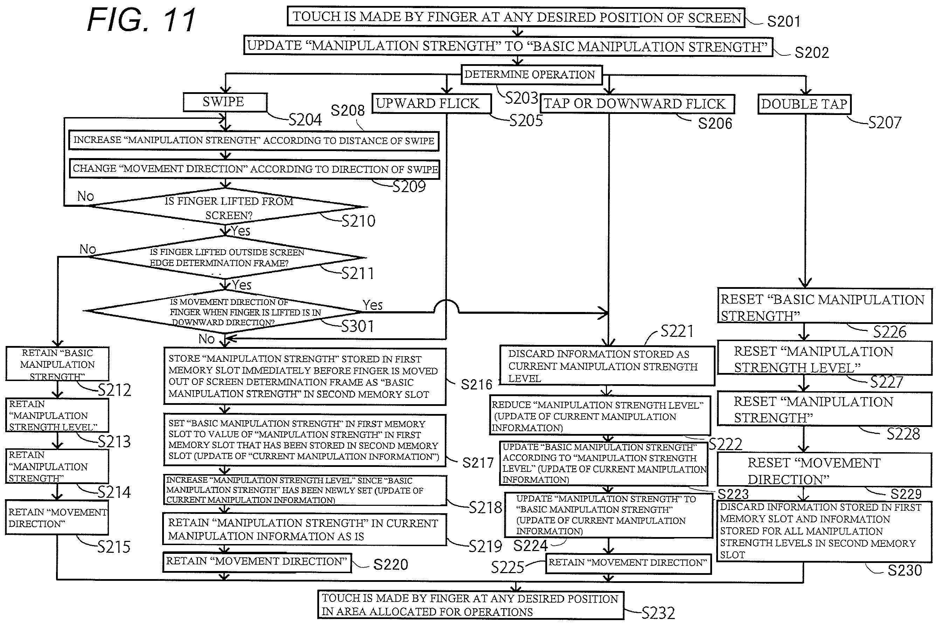

Therefore, a variation example to the embodiment is presented as illustrated in FIG. 11. In FIG. 11, when the finger is lifted outside the screen edge determination frame while a swipe is performed, a step is added to determine whether the movement direction of the finger when the finger is lifted is in the predetermined downward direction or not (S301).

The predetermined downward direction here does not have to be a downward direction completely parallel to a side of the screen, and the predetermined downward direction is a downward direction that is oriented within a range of predetermined angles.

In the case of "No" in S301, in other words, when the finger is lifted outside the screen edge determination frame while the finger is moved in a direction other than the downward direction, the controller 2 proceeds to the processes in S216 and later and executes a process of increasing the "manipulation strength level" by one level. On the other hand, in the case of "Yes" in S301, in the same manner as the tap or the downward flick, the controller 2 proceeds to the processes in S221 and later and executes a process of reducing the "manipulation strength level" by one level.

In this manner, when a swipe in the downward direction is performed and the finger is lifted outside the screen edge determination frame while the swipe in the downward direction is performed, the controller 2 proceeds to the processes in S221 and later, the "manipulation strength level" is reduced by one level, and the "current manipulation information" is updated to the "manipulation strength" that corresponds to the reduced "manipulation strength level".

Other processes, such as the process of increasing or reducing the manipulation strength, may be preferably modified appropriately according to the characteristics of the manipulation target or the operation environment.

For example, when the finger is lifted outside the screen operation frame, determination may be made on all or part of whether the swipe operation is in the upward direction, whether the swipe operation is in the right direction, whether the swipe operation is in the left direction, and whether the swipe operation is in the downward direction, and the process of increasing or reducing the manipulation strength may be executed according to the direction of the swipe operation.

According to the variation example described above, when the finger is lifted outside the screen edge determination frame with the swipe in the downward direction, the strength is reduced by one level, and an intuitively suitable operation is made possible.

In the examples described above, the functions of the information processing apparatus 1 are achieved by the information processing apparatus (computer) 1, more specifically, the controller 2 processing the program for manipulation stored in the storage device 3. However the disclosure is not limited to this. Some of the functions may be achieved by hardware, such as an ASIC (Application Specific Integrated Circuit), a FPGA (Field Programmable Gate Array), CPLD (Complex Programmable Logic Device) or the like. In this case, the ASIC, FPGA, a CPLD or the like constitute a part of the computer 1.

Although the present disclosure has been described in detail above, the description above merely exemplifies the present disclosure in every respect, and does not limit the scope of the present disclosure. It should be appreciated that various modifications or variations may be made without departing from the scope of the present disclosure. Components of the present disclosure disclosed in the present description shall individually hold as an independent invention. The invention realized by any combination of the components shall fall under the present disclosure. For example, the invention may be realized by the computer having any combinations of the components and means explained above, and the invention may be realized by a method having any combination of the steps and process performed by the computer.

### INDUSTRIAL APPLICABILITY

The present disclosure relates to a program for manipulating an object, and is industrially applicable.

### REFERENCE SIGNS LIST

- 1: Information processing apparatus
- 2: Controller
- 3: Storage device
- 4: Display device
- 4a: Display
- 4b: Operation input part
- 5: Communication device
- 6: Input device

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. A program **characterized by** causing a computer connected to or including a display device that includes an operation input part for receiving a touch operation, to serve as:
means for determining whether or not a touch made on the operation input part is lost during a swipe;
means for retaining current manipulation information with respect to an object that serves as a manipulation target when it is determined that the touch made on the operation input part is lost during the swipe;
means for displaying, in a state in which a touch is not made on the operation input part, the object in such a way that the object is moving on; and
means for resuming manipulation of the object according to the retained current manipulation information when a touch is made on the operation input part again.

2. The program according to claim 1, **characterized in that**
the means for retaining retains information related to a movement direction and manipulation strength according to the swipe in any desired direction on a display screen as the current manipulation information with respect to the object that serves as a manipulation target when it is determined that the touch made on the operation input part is lost during the swipe; and
the means for displaying, generates, in a state in which a touch is not made on the operation input part, an image of the object and a background image according to the movement direction and the manipulation strength represented by the retained current manipulation information, and displays the object in such a way that the object is moving on the background image.

3. The program according to claim 2, **characterized in that**
the program further causes the computer to serve as means for generating and displaying a virtual controller image indicating the manipulation strength and the movement direction.

4. The program according to any one of claims 1 to 3, **characterized in that** the program enables the computer to configure all areas capable of detecting an operation input to serve as the operation input part and to configure an operation determination frame to serve as a screen edge determination frame when the entire screen is configured to serve as the operation input part.

5. The program according to any one of claims 1 to 4, **characterized in that**
the means for retaining updates the current manipulation information to manipulation information having one level higher strength when it is determined that the touch is lost outside a screen edge determination frame defined in advance, and
the means for displaying displays, in a state in which a touch is not made on the operation input part, movement of the object according to the current manipulation information that has been updated.

6. The program according any one of claims 1 to 5, **characterized in that**
the means for retaining, is capable of updating the current manipulation information to manipulation information having one level lower strength when it is determined that the touch is lost outside a screen edge determination frame defined in advance and a movement direction when the touch is lost is in a predetermined downward direction, and
the means for displaying displays, in a state in which a touch is not made on the operation input part, movement of the object according to the current manipulation information that has been updated.

7. A program according to any one of claims 1 to 6, **characterized by** further causing the computer to serve as means for determining whether or not an operation performed on the operation input part is a flick in a predetermined upward direction, and **characterized in that**
the means for retaining updates the current manipulation information to manipulation information having one level higher strength when it is determined that the operation is a flick in the predetermined upward direction, and
the means for displaying displays, in a state in which a touch is not made on the operation input part, movement of the object according to the current manipulation information that has been updated.

8. The program according to any one of claims 1 to 7 **characterized by** the computer serves as means for determining whether or not an operation performed on the operation input part is a tap or a flick in a predetermined downward direction, and **characterized in that**
the means for retaining updates the current manipulation information to manipulation information having one level lower strength when it is determined that the operation is a tap or a flick in the predetermined downward direction, and
the means for displaying displays, in a state in which a touch is not made on the operation input part, movement of the object according to the current manipulation information that has been updated.

9. The program according to any one of claims 1 to 8, **characterized by** further causing the computer to serve as means for determining whether or not an operation performed on the operation input part is a double tap, and **characterized in that**
the means for retaining discards the retained information when it is determined that the operation is a double tap, and
the means for displaying displays the object being stopped.
